# EUROPÄISCHE PATENTSCHRIFT

(11) **EP 1 594 727 B1**
(45) Veröffentlichungstag und Bekanntmachung des Hinweises auf die Patenterteilung: **05.09.2007**
(21) Anmeldenummer: 04704235.3
(22) Anmeldetag: 22.01.2004
(51) Int. Cl.: B60R 21/01, E05C 17/00

(54) **VERFAHREN UND VORRICHTUNG ZUR VERMEIDUNG VON PERSONEN- UND SACHSCHÄDEN DURCH KRAFTFAHRZEUGTÜREN**
METHOD AND DEVICE FOR PREVENTING INJURIES AND MATERIAL DAMAGE CAUSED BY MOTOR VEHICLE DOORS
PROCEDE ET SYSTEME PERMETTANT D'EVITER DES DOMMAGES CORPORELS OU MATERIELS OCCASIONNES PAR DES PORTES DE VEHICULES AUTOMOBILES

(30) Priorität: 17.02.2003 DE 10306552; 19.03.2003 DE 10312252
(43) Veröffentlichungstag der Anmeldung: 16.11.2005
(73) Patentinhaber: SIEMENS AKTIENGESELLSCHAFT, 80333 München (DE)
(72) Erfinder: DAS, Chandan, 93180 Deuerling (DE); FRENZEL, Henryk, 93059 Regensburg (DE); HAMANN, Christoph, 93107 Thalmassing (DE); VOLTZ, Stephan, 91230 Happurg (DE); WAGNER, Ulrich, 93055 Regensburg (DE)
(86) Internationale Anmeldenummer: PCT/EP2004/000528
(87) Internationale Veröffentlichungsnummer: WO 2004/071815

(56) Entgegenhaltungen:
- WO-A-96/33079
- DE-A- 10 117 516
- DE-A- 19 537 619
- DE-A- 19 836 310
- US-A- 4 458 446
- US-B1- 6 205 710

## Beschreibung

Die Erfindung betrifft ein Verfahren und eine Vorrichtung zur Vermeidung von Personen- und Sachschäden durch Kraftfahrzeugtüren anhaltender und/oder parkender Kraftfahrzeuge mit wenigstens einer den Außenraum erfassenden Überwachungseinheit.

Es gibt Situationen im Straßenverkehr, da ist der Autofahrer einfach überfordert. Beispielsweise Bremsen in der Kolonne: Wer kurze Zeit unachtsam ist, wenn vor ihm einer bremst, hat kaum noch eine Chance, rechtzeitig zum Stehen zu kommen. Unfallforscher fordern deshalb Sensoren, die auf Bremslichter reagieren, bevor sie der Autofahrer wahrnimmt.

Ähnlich ist es beim Wechsel der Fahrspur. Wenn man plötzlich ausweichen muss, geht das oft so schnell, dass die Zeit für den geübten Blick in den Rückspiegel nicht ausreicht. Auch dabei können Sensoren helfen und den Verkehrsraum neben dem eigenen Auto unablässig im Focus behalten, um zu warnen, bevor ein Richtungswechsel andere Gefahren heraufbeschwört.

Ein echtes Problem entsteht dann, wenn ein überholendes Fahrzeug so weit aufgerückt ist, dass der Fahrer gar keine Chance hat, es zu sehen. Es verschwindet für ihn im sogenannten "Toten Winkel" (sog. blind-spot) neben dem eigenen Fahrzeug. Bei Personenkraftwagen (Pkw) lässt sich das durch den regelmäßigen Blick in den Innenrückspiegel kompensieren, den es aber bei Lastkraftwagen (Lkw) mit Kastenaufbau nicht gibt.

Zur Vermeidung der vorstehenden Probleme ist bekannt, beispielsweise eine den toten Winkel überwachende Mikro-Kamera im linken Außenspiegel anzuordnen. Setzt der Fahrer den linken Blinker oder zieht er ohne zu blinken auf die benachbarte Fahrspur, wird er optisch und/oder akustisch gewarnt, wenn sich ein anderes Fahrzeug in diesem objektiv nicht einsehbaren Bereich befindet.

Während für derartige Probleme im Zusammenhang mit bewegten Kraftfahrzeugen im Stand der Technik hinreichend Lösungsvorschläge auffindbar sind, scheint das Gefährdungspotential durch anhaltende oder parkende Kraftfahrzeuge bislang unberücksichtigt geblieben. Während im anhaltenden bzw. haltenden Fahrzeug sich zumeist noch ein Insasse aufhält, sei im Folgenden ein parkendes Fahrzeug durch einen insassenfreien und regelmäßig verschlossenen Zustand definiert.

Häufig passieren gerade beim Aussteigen von Insassen aus einem Kraftfahrzeug Unfälle, insb. wenn unachtsam Türen geöffnet werden, auf die dann andere Kraftfahrzeuge oder Fahrradfahrer auffahren. Dadurch kann es vor allem bei Fahrradfahrern zu schweren Verletzungen kommen, wenn diese über die Fahrzeugtür auf die Strasse, den Gehweg oder den Radweg geschleudert werden und bekanntermaßen über kein passives Schutzsystem verfügen.

Deshalb findet sich in den Straßenverkehrsordnungen der meisten Länder Europas eine Vorschrift, demnach die Türen eines Fahrzeuges nicht so lange geöffnet werden und auch nicht geöffnet bleiben dürfen, als dadurch andere Straßenbenützer gefährdet oder behindert werden können. Eine Regel, die einem noch aus der Fahrschulzeit bekannt ist, müsste man eigentlich glauben. Leider ist dem nicht so, wie viele Verkehrsunfälle beweisen, die ihre Ursache genau in der Missachtung dieses Gebotes haben.

Dieses Gebot richtet sich nicht etwa nur an den Fahrzeuglenker, sondern an jedermann, der eine Fahrzeugtür öffnet, also auch an den Beifahrer sowie an alle anderen aussteigenden oder herausspringenden Fahrzeuginsassen, denn auch der Insasse selbst kann durch gerade passierende Radfahrer, Kraftfahrzeuge oder dergleichen schwere Verletzungen davon tragen.

Nicht zuletzt richtet sich das Gebot auch an die Personen, die bloß beim Ein- und Aussteigen behilflich sind und die Türe von außen öffnen bzw. geöffnet halten. Außerdem gilt die Regel sowohl für das Öffnen straßenseitiger als auch gehsteigseitiger Türen eines anhaltenden bzw. haltenden oder parkenden Fahrzeuges und gleich, ob es sich um eine, ggf. bereits elektromotorisch, betriebene Flügel- oder Schiebetür handelt, denn auch Fußgänger sind Straßenbenützer, die durch unachtsames Öffnen einer Fahrzeugtür oder durch aussteigende Personen, herausspringende Kinder, etc. zu Schaden kommen können.

Was schließlich schon für personengebundenes Öffnen von Kraftfahrzeugtüren jedweder Art gilt, gilt erst recht für automatisierte Mechanismen zum Öffnen von Fahrzeugtüren, gleich ob es sich hierbei um Kofferraum- oder Heckklappen handelt, oder um Flügel- und/oder Schiebetüren, wobei der artige Mechanismen nicht nur bei Sonderausstattungen z.B. für Behinderte sondern auch bei Serienfahrzeugen zunehmend Einzug halten.

Zur Vermeidung derartiger Personenschäden sind häufig neben den als Park- oder Halteflächen ausgewiesenen Zonen Hindernisse wie sog. Poller, Begrenzungssteine oder dergleichen, angeordnet, die aufgrund ihrer mitunter niedrigen Bauhöhe durch das Seitenfenster kaum ausmachbar sind. Beim Öffnen der Fahrzeugtür kommt es daher nicht selten zu ärgerlichen Lack- und/oder Blechschäden am Fahrzeug, wenn diese z.T. heftig gegen derartige Begrenzungen anstoßen, was je nach geneigter örtlicher Topographie mitunter kaum vermeidbar ist.

Ähnlich problembehaftet ist das mechanische und/oder moderner motorische Entriegeln bzw. Öffnen einer als Heckklappe ausgebildeten Fahrzeugtür eines Kraftfahrzeuges in Tiefgaragen insb. eines unbekannten Parkhauses oder Einkaufzentrums. Unterschiedliche Deckenhöhen aufgrund von Unterzügen, Stützträgern, an der Decke geführter Versorgungsleitungen, oder dergleichen, lassen sich insbesondere bei häufig anzutreffenden schlechten Lichtverhältnissen kaum ausmachen oder deren Distanz schlecht einschätzen, so dass nicht selten Heckklappen, unterstützt durch Gasdruckdämpfer oder dergleichen, z.T. heftig daran anstoßen und beschädigt werden.

Aus der Patentschrift DE 195 37 619 C2, als nächstliegender Stand der Technik angesehen, ist eine Überwachungsvorrichtung bekannt, die in Abhängigkeit von der Annäherung eines Körpers im Verkehrsraum einen Türgriff bzw. ein Blockadeeinrichtung aktiviert.

Es ist Aufgabe der vorliegenden Erfindung, die vorgenannten Nachteile zu vermieden. Insbesondere sind ein Verfahren sowie eine Vorrichtung zur Vermeidung von Personen- und Sachschäden durch Fahrzeugtüren anhaltender oder parkender Kraftfahrzeuge anzugeben.

Diese Aufgabe wird erfindungsgemäß durch die Merkmale der unabhängigen Patentansprüche gelöst.

Vorteilhafte Ausgestaltungen und Weiterbildungen, welche einzeln oder in Kombination miteinander eingesetzt werden können, sind Gegenstand der abhängigen Ansprüche.

Die Erfindung zur Vermeidung von Personen- und Sachschäden durch Kraftfahrzeugtüren anhaltender Kraftfahrzeuge umfasst wenigstens eine den Außenraum, insbesondere den neben dem Fahrzeug, erfassenden Überwachungseinheit, sowie eine Auswerteeinheit für die von der Überwachungseinheit übermittelten Daten. Bei durch die Auswerteeinheit erkannter Unterschreitung eines festen oder variablen Schwellwertes (SW) oder bei durch die Auswerteeinheit erkanntem Empfang eines den Schließmechanismus der Fahrzeugtür entriegelnden Signals wird ein den innenliegenden Türgriff der Fahrzeugtür überwachender Betriebsmodus aktiviert und die Ausgabe eines Warnsignals veranlasst, sobald ein Insasse und/oder eine entsprechende (vorzugsweise mechanisch, elektrisch und/oder motorisch, insb. elektromotorisch, betriebene) Einrichtung den innenlie genden Türgriff der Fahrzeugtür betätigt und/oder entriegelt, obwohl im überwachten Bereich der Überwachungseinheit ein im Wesentlichen ortsfestes oder herannahendes Objekt detektiert ist. Als ortsfeste Objekte sind insbesondere Poller, Begrenzungssteine, Bordsteinkanten oder dergleichen ausmachbar, aber auch Unebenheiten oder Pfützen, um einen Passagier vor einem Umknicken oder bloß vor nassen Füßen zu bewahren. Die vorgenannte Erfindung hat damit zum Vorteil, dass die Gefahr einer Personen- oder Sachschädigung durch das unachtsame Öffnen einer Fahrzeugtür durch eine Person von innen deutlich minimiert ist, weil die Ausgabe eines Warnsignals regelmäßig ein achtsameres Verhalten bei dem Nutzer der Fahrzeugtür bewirken wird.

Gegenstand der vorliegenden Erfindung ist auch ein alternatives Verfahren bzw. eine Vorrichtung zur Vermeidung von Personen- und Sachschäden durch Kraftfahrzeugtüren anhaltender oder parkender Kraftfahrzeuge, umfassend wenigstens eine den Außenraum, insbesondere den neben und/oder oberhalb dem Fahrzeug, erfassende Überwachungseinheit sowie eine Auswerteeinheit für die von der Überwachungseinheit übermittelten Daten. Bei durch die Auswerteeinheit erkannter Unterschreitung eines festen oder variablen Schwellwertes (SW) oder bei durch die Auswerteeinheit erkanntem Empfang eines den Schließmechanismus der Fahrzeugtür entriegelnden Signals wird ein den außenliegenden Türgriff der Fahrzeugtür überwachender Betriebsmodus aktiviert und die Ausgabe eines Warnsignals veranlasst, sobald eine Person und/oder eine entsprechende (vorzugsweise mechanisch, elektrisch und/oder motorisch, insb. elektromotorisch, betriebene) Einrichtung den außenliegenden Türgriff der Fahrzeugtür betätigt und/oder entriegelt, obwohl im überwachten Bereich der Überwachungseinheit ein, insbesondere herannahendes oder oberhalb des Fahrzeuges ortsfestes, Objekt detektiert ist. Als herannahende Objekte werden insbesondere Radfahrer, Fußgänger oder bewegte Drittfahrzeuge erkannt. Als oberhalb des Fahrzeuges ortsfeste Objekte werden insbesondere Deckenträger, an einer Decke geführte Leitungen oder sonstige eine Deckenhöhe vermindernde Elemente erkannt. Die vorgenannte Erfindung hat zum Vorteil, dass die Gefahr einer Personen- oder Sachschädigung durch das unachtsame Öffnen einer Fahrzeugtür durch eine Person von außen deutlich minimiert ist, weil die Ausgabe eines Warnsignals regelmäßig ein achtsameres Verhalten bei dem Nutzer der Fahrzeugtür bewirken wird.

Erfindungsgemäß ist ein von der Geschwindigkeit des Fahrzeuges abhängiger Schwellwert (SW) vorgesehen. In diesem Fall wird der Türgriffüberwachungsmodus bei Unterschreitung einer Fahrzeuggeschwindigkeit aktiviert, beispielsweise spätestens bei 5 km/h, insbesondere schon bei 8 km/h, vorzugsweise schon bei 10 km/h. Vorstehende Geschwindigkeitswerte orientieren sich an einer Lebenserfahrung, demnach auch noch rollende bzw. abbremsende Fahrzeuge nicht selten in unvorsichtiger Weise verlassen werden. Das Geschwindigkeitssignal selbst kann beispielsweise vom kraftfahrzeugeigenen Tachometer als auch von einer geeigneten Überwachungseinheit stammen, insbesondere wenn diese eine Bilderfassungseinheit ist.

Ggf. kumulativ zu einem geschwindigkeitsabhängigen Schwellwert (SW) ist ein beschleunigungsabhängiger Schwellwert (SW) vorgesehen. In diesem Fall wird vorgeschlagen, den Türgriffüberwachungsmodus bevorzugt in Abhängigkeit einer erkannten Fahrzeugverzögerung zu aktivieren.

Schließlich wird auch vorgeschlagen, den Türgriffüberwachungsmodus in Abhängigkeit einer erkannten Objektdistanz zu aktivieren. Dies ist insbesondere dann von Vorteil, wenn als Fahrzeugtür die Heckklappe eines Fahrzeuges zu öffnen ist, welche beispielsweise in einer Tiefgarage zwar geöffnet werden aber nicht gegen die Decke bzw. abgehängte Bereiche anschlagen soll. Nach diesem Szenario ist eine Überwachungseinheit, beispielsweise in der Heckstoßstange, in jeden Fall so angeordnet, dass sie den oberhalb der Heckklappe liegenden Außenraum des Kraftfahrzeuges im Hinblick auf ortsfeste Objekte erfasst und bei nicht ausreichender Distanz die Ausgabe eines Warnsignal veranlasst. Es versteht sich, dass derartige Schutzmaßnahmen auch für die Kühlerhaube eines Kraftfahrzeuges denkbar, aber eher akademischer Natur, sind.

Nach der Erfindung werden bevorzugt optische, akustische und/oder habtische Warnsignale ausgegeben.

Als optische Warnsignale bieten sich beispielsweise rot blinkende light emitting diodes (LED-) Anzeigen an. Ein derartiges Mittel zur Ausgabe eines optischen Warnsignals ist bevorzugt an der Fahrzeugtür angeordnet, beispielsweise in räumlicher und/oder optischer Nachbarschaft des innenliegenden Türgriffs, vorzugsweise gleichermaßen gut von innen und außen sichtbar. Werden demgegenüber keine Gefahrengegenstände detektiert, kann dies beispielsweise mit einer dauerhaft grün leuchtenden lichtemittierenden Diode (LED) angezeigt werden.

Als akustische Warnsignale kommen einfache Tonausgaben wie beispielsweise ein gleichmäßiger Dauerton oder intuitive Signale wie das einer Fahrradklingel oder einer Autohupe ebenso in Frage wie komfortablere Sprachausgaben, beispielsweise etwa "Vorsicht : Poller", "Hauswand", "Achtung: Radfahrer", "fahrendes, ggf. auch parkendes, Drittfahrzeug", "Obacht : Bodenunebenheit", "Bordsteinkante", "Wasserpfütze" oder dergleichen. Ein Lautsprecher für derartige Tonausgaben ist bevorzugt im Dachhimmel, in der Fahrzeugtür selbst oder an anderer geeigneter Stelle im Kraftfahrzeug angeordnet, welcher auch Teil der kraftfahrzeugeigenen Musikanlage sein kann. Letztgenannter Fall erlaubt in vorteilhafter Weise die Ausgabe richtungsabhängiger bzw. gerichteter Tonsignale ähnlich wie beim sog. Stereo - Surround, beispielsweise im Kino.

Habtische Mittel verzögern erfindungsgemäß bevorzugt ein Öffnen der Fahrzeugtür. Beispielsweise gestatten diese das Öffnen einer Tür erst bei einem Zweitversuch, insbesondere wenn beim Einschalten der Zündung die Fahrzeugtüren automatisch, zum Schutz der Insassen, verriegelt wurden, damit niemand eine Tür aufreißen und die Insassen bedrohen kann. Alternativ oder ggf. kumulativ hierzu ist auch ein erst einsetzender Verriegelungsmechanismus denkbar, welcher beispielsweise in Verbindung mit einem, vorzugsweise neben oder am oder im Griff angeordneten bzw. integrierten, Bestätigungsmechanismus, z.B. eines Buttons, deaktiviert wird. In jedem Fall werden im Fall eines Unfalls sofort alle Türen entriegelt, damit von außen Hilfe möglich ist.

In einer weiteren bevorzugten Ausgestaltung der Erfindung werden andere Verkehrsteilnehmer bzw. Straßenbenützer wie Fußgänger, Radfahrer oder Führer von Drittfahrzeugen ebenfalls vor dem anstehenden Türöffnen oder bei späterem Herannahen vor einer bereits offenenstehenden Fahrzeugtür gewarnt, beispielsweise über die kraftfahrzeugeigenen Blinker und/oder Scheinwerfer bzw. Rücklichter.

Erfindungsgemäß bevorzugt ist eine Überwachungseinheit mit einem im Wesentlichen entgegen der Fahrtrichtung ausgerichtetem Überwachungsbereich im Außenrückspiegel und/oder hinter der Heckscheibe und/oder im Rücklicht und/oder im Frontlicht und/oder im Blinker des Kraftfahrzeuges angeordnet. Alternativ oder kumulativ hierzu ist eine Überwachungseinheit mit einem im Wesentlichen in Fahrtrichtung ausgerichtetem Überwachungsbereich im Außenrückspiegel und/oder hinter der Heckscheibe und/oder im Rücklicht und/oder im Frontlicht und/oder im Blinker des Kraftfahrzeuges angeordnet. Schließlich ist eine Überwachungseinheit mit einem im Wesentlichen vertikal nach oben ausgerichteten Überwachungsbereich in der Stoßstange, der Mobilfunk- oder Radioantenne, oder anderer geeigneter Stelle des Kraftfahrzeuges angeordnet. Derartige Anordnungen erlauben in vorteilhafter Weise eine wenigstens teilweise bis nahezu vollständige Überwachung des Außenraumes eines Kraftfahrzeuges. Als Überwachungseinheiten haben sich Einheiten mit 2D- oder 3D-Bilderfassungssensoren wie in Mono-, Stereo- und/oder Laufzeitkameras, Ultraschallsensoren, Radarsensoren, Infrarotsensoren, und/oder dergleichen mehr, bewährt.

Erfindungsgemäß bevorzugt lassen sich die Fahrzeugtüren je nach Ausstattung des Kraftfahrzeuges und/oder Zweckmäßigkeit ganz oder teilweise mechanisch und/oder elektrisch und/oder motorisch, insb. elektromotorisch, ent- und/oder verriegeln. Insbesondere erfolgt das Öffnen und Schließen von Flügel- und Schiebetüren sowie des Kofferraumdeckels bzw. der Heckklappe elektrisch und automatisiert per Knopfdruck Fernbedienung, oder dergleichen, beispielsweise vom Fahrersitz aus.

Die vorliegende Erfindung verringert in vorteilhafter Weise die Gefahr von Unfällen, Sach- und/oder Personenschäden. Sie eignet sich in vorteilhafter Weise als Implementierung in bereits bekannte, den Führer eines bewegten Kraftfahrzeugs unterstützende Assistenten wie den zur Spurerkennung bzw. Überwachung, zum sog. Blind-Spot und Spurwechseln, zur Hinderniswarnung, zur Pre-Crash-Sensierung, zur Verkehrszeichenerkennung, zum Einparken, oder dergleichen mehr.

Zusätzliche Einzelheiten und weitere Vorteile der Erfindung werden nachfolgend an Hand bevorzugter Ausführungsbeispiele in Verbindung mit der beigefügten Zeichnung beschrieben.

Darin zeigen schematisch:
- Fig. 1: ein Kraftfahrzeug mit einer den seitlichen Außenraum erfassenden Überwachungseinheit; und
- Fig. 2: ein Kraftfahrzeug mit einer den oberen Außenraum erfassenden Überwachungseinheit.

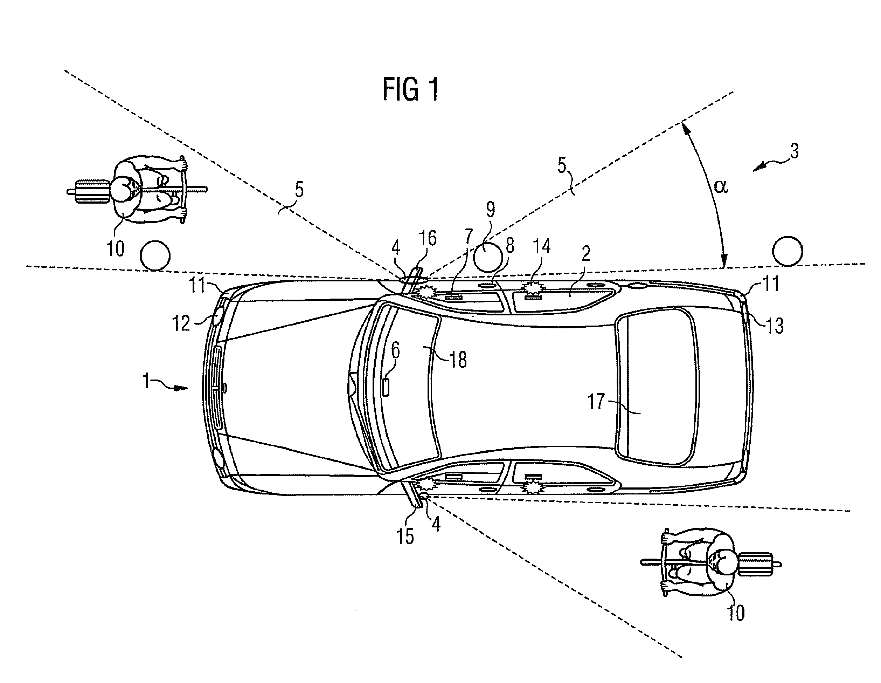

Fig. 1 zeigt schematisch ein Kraftfahrzeug 1. Dieses ist mit wenigstens einer, den Außenraum 3 erfassenden Überwachungseinheit 4 ausgestattet. Als Überwachungseinheit 4 bieten sich vorzugsweise Einheiten mit 2D oder 3D-Bilderfassungssensoren wie in Mono-, Stereo- und/oder Laufzeitkameras, Ultraschallsensoren, Radarsensoren, Infrarotsensoren, und/oder dergleichen mehr an. Das Prinzip der Erfindung wird im Folgenden beispielhaft anhand einer Bilderfassungseinheit, welche bevorzugt eine Kamera ist, beschrieben. Eine oder mehrere Auswerteeinheiten 6 für z.B. die von der Bilderfassungseinheit 4 übermittelten Bilddaten sind vorzugsweise an zentraler Stelle, beispielsweise im Fahrzeugtunnel, des Kraftfahrzeugs 1 oder an einer anderen geeigneten Stelle im Fahrzeug 1 angeordnet.

Beim Anhalten des Fahrzeugs 1 wird bei durch die Auswerteeinheit 6 erkannter Unterschreitung eines festen oder variablen geschwihdigkeits-, beschleunigungs- und/oder distanzabhängigen Schwellwertes (SW) oder bei durch die Auswerteeinheit 6 erkanntem Empfang eines den Schließmechanismus der Fahrzeugtüren 2 entriegelnden Signals ein den inneren 7 und/oder äußeren 8 Türgriff überwachender Betriebsmodus aktiviert und der Außenraum 3 des Kraftfahrzeuges 1 mittels der Kamera 4 überwacht.

Der Sensor der Überwachungseinheit 4, im Beispielfall der Kamera eine Optik, weist einen Öffnungswinkel α auf, welcher ein sogenanntes, sich sowohl horizontal als auch vertikal erstreckendes, Blickfeld 5 definiert, welches die Überwachung darin befindlicher Objekte, Hindernisse oder Gefährdungen gestattet. Im Fall eines ortsfesten Hindernisses, beispielsweise einem Poller 9, oder einem herannahender Objekt, beispielsweise einem Fahrradfahrer 10, einem Fußgänger, einem Pkw (nicht dargestellt) oder dergleichen, wird dieses von dem Kamerasystem 4 registriert, woraufhin die Auswerteeinheit 6 die Ausgabe eines optischen, akustischen und/oder habtischen Warnsignals veranlasst, insbesondere sobald ein Türgriff von innen 7 und/oder von außen 8 betätigt oder entriegelt wird.

Dies ist im modernen Automobilbau insbesondere im Hinblick auf den zunehmenden Einzug automatisierter elektronischer Ent- und Verriegelungssysteme von Vorteil. So lassen sich zunehmend als Heckklappe ausgebildete Fahrzeugtüren 2, beispielsweise vom Fahrersitz aus, elektrisch entriegeln und ggf. unterstützt durch Federkraft mechanisch aufrichten und/oder ab einem bestimmten Öffnungswinkel in jeder Position vorteilhaft fixieren. Würden derart automatisierte Vorgänge unkontrolliert ablaufen, könnten in vielen Fällen Sachschäden kaum vermieden werden. Gleiches gilt beispielsweise für das elektromotorisch unterstützte automatische Öffnen von als Schiebetür ausgebildeten Fahrzeugtüren 2, zumal dieser Vorgang für Dritte - anders als beim Öffnen einer Flügeltür - deutlich schwerer auszumachen ist. Wenn dann, wozu insbesondere Kinder - aber auch manch Erwachsene - neigen, ein Insasse ohne Umsicht aus einem Fahrzeug 1 springt, sind ohne der vorliegenden Erfindung Personenschäden kaum zu vermeiden, insb. wenn passierende Verkehrsteilnehmer wie ein Radfahrer 10 etc. nicht mehr abbremsen oder ausweichen können.

Als optische Warnsignale bieten sich beispielsweise rot blinkende light emitting diodes (LED-) Anzeigen 14 an. Ein derartiges Mittel 14 zur Ausgabe eines optischen Warnsignals ist bevorzugt an der Fahrzeugtür 2 angeordnet, beispielsweise in räumlicher und/oder optischer Nachbarschaft des innenliegenden Türgriffs 7, und insbesondere gleichermaßen gut von innen und außen sichtbar. Werden demgegenüber keine Gefahrengegenstände 9, 10 etc. detektiert, kann dies beispielsweise mit einer dauerhaft grün leuchtenden LED 14 angezeigt werden.

Erfindungsgemäß bevorzugt erfolgt auch eine Warnung anderer Verkehrsteilnehmer; insbesondere über die fahrzeugeigenen Blinker 11 und/oder Scheinwerfer 12 bzw. Rücklichter 13.

Als Einbauorte für eine Kamera 4 mit einem im Wesentlichen entgegen der Fahrtrichtung ausgerichtetem Blickfeld 5 bieten sich der linke 15 und rechte 16 Außenrückspiegel, ein Platz hinter der Heckscheibe 17, im Rücklicht 13, im - insb. seitlichen Bereich des - Frontlichts 12 und/oder im Blinker 11 des Kraftfahrzeuges 1 an.

Als Einbauorte für eine Kamera 4 mit einem im Wesentlichen in Fahrtrichtung ausgerichtetem Blickfeld 5 bieten sich gleichfalls der linke 15 und rechte 16 Außenrückspiegel, ein Platz hinter der Front- bzw. Windschutzscheibe 18, im Rücklicht 13, im Frontlicht 12 und/oder im - insb. seitlichen Bereich des - Blinkers 11 des Kraftfahrzeuges 1 an.

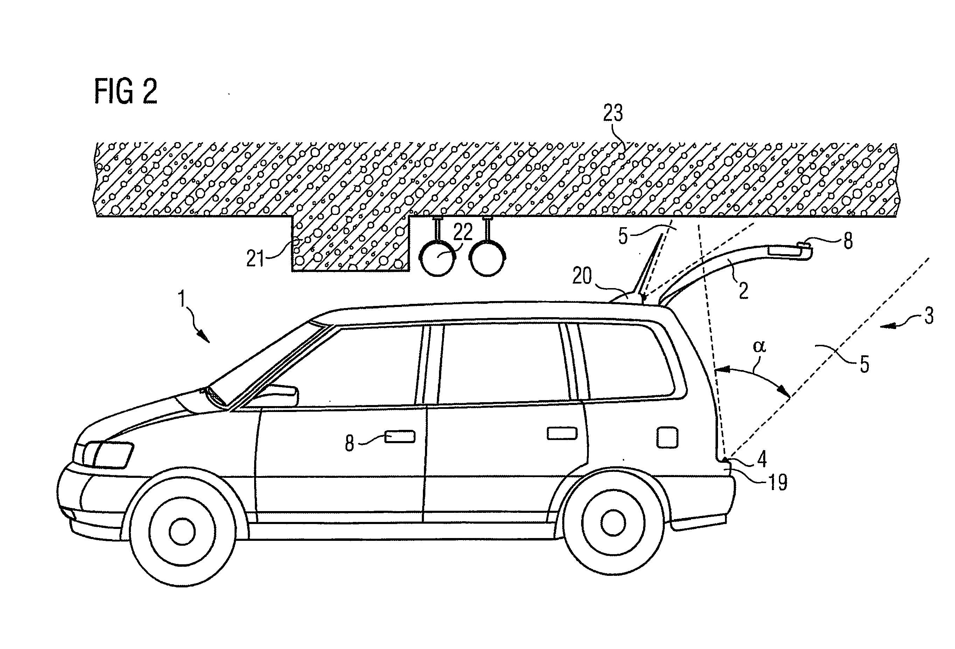

Fig. 2 zeigt ein Kraftfahrzeug 1 mit einer den oberen Außenraum 3 erfassenden Überwachungseinheit 4, um die Beschädigung einer als Heckklappe ausgebildeten Fahrzeugtür 2 insb. in einer Tiefgarage zu vermeiden. Ein Modus zur Überwachung des Türgriffs 8 der Heckklappe 2 ist wie zu Fig. 1 beschrieben aktiviert. Als Einbauorte für eine derartige Überwachungseinheit 4 mit einem, beispielsweise vertikal, nach oben ausgerichtetem Blickfeld 5 bieten sich insb. die Stoßstange 19 an oder auch die Mobilfunk- bzw. Radioantenne 20 des Kraftfahrzeuges 1.

Der Sensor, beispielsweise eine Optik, der Überwachungseinheit 4 weist einen Öffnungswinkel α auf, welcher ein sogenanntes, sich im Wesentlichen vertikal aber auch ggf. horizontal erstreckendes, Blickfeld 5 definiert, welches die Überwachung darin befindlicher Objekte, Hindernisse oder Gefährdungen gestattet. Im Falle eines ortsfesten Hindernisses in einer Tiefgarage, beispielsweise eines Stützelementes 21 oder einer an der Decke 23 der Tiefgarage geführten Rohrleitung 22 wird dieses von dem Kamerasystem 4 registriert, woraufhin die Auswerteeinheit 6 die Ausgabe eines optischen, akustischen und/oder habtischen Warnsignals veranlasst, insbesondere sobald der Türgriff 8 der Heckklappe 2 von außen betätigt oder, ggf. automatisiert, entriegelt wird.

Die vorliegende Erfindung verringert in vorteilhafter Weise die Gefahr von Unfällen, Sach- oder Personenschäden. Sie eignet sich in vorteilhafter Weise als Implementierung in bereits bekannte, den Führer eines bewegten Kraftfahrzeugs 1 unterstützende Assistenten wie den zur Spurerkennung bzw. Überwachung, zum sog. Blind-Spot und Spurwechseln, zur Hinderniswarnung, zur Pre-Crash-Sensierung, zur Verkehrszeichenerkennung, zum Einparken, oder dergleichen mehr.

## Patentansprüche

1. Verfahren zur Vermeidung von Personen- und Sachschäden durch Kraftfahrzeugtüren (2) anhaltender Kraftfahrzeuge (1) mit wenigstens einer den Außenraum (3), insbesondere neben dem Fahrzeug (1), erfassenden Überwachungseinheit (4),
bei dem
eine Auswerteeinheit (6) für die von der Überwachungseinheit (4) übermittelten Daten bei durch die Auswerteeinheit (6) erkannter Unterschreitung eines festen oder variablen Schwellwertes (SW)
oder
bei durch die Auswerteeinheit (6) erkanntem Empfang eines den Schließmechanismus der Fahrzeugtür (2) entriegelnden Signals
- einen den innenliegenden Türgriff (7) der Fahrzeugtür (2) überwachenden Betriebsmodus, also einen Türgriffüberwachungsmodus, aktiviert, und
- die Ausgabe eines Warnsignals veranlasst, sobald ein Insasse und/oder eine entsprechende Einrichtung den innenliegenden Türgriff (7) der Fahrzeugtür (2) betätigt und/oder entriegelt, obwohl im überwachten Bereich (5) der Überwachungseinheit (4) ein im Wesentlichen ortsfestes (9) oder herannahendes (10) Objekt detektiert ist
**dadurch gekennzeichnet, dass**
der Türgriffüberwachungsmodus bei Unterschreitung einer Fahrzeuggeschwindigkeit als Schwellwert aktiviert wird.

2. Verfahren, zur Vermeidung von Personen- und Sachschäden durch Kraftfahrzeugtüren (2) anhaltender oder parkender Kraftfahrzeuge (1) mit wenigstens einer den Außenraum (3), insbesondere neben und/oder oberhalb dem Fahrzeug (1), erfassenden Überwachungseinheit (4),
bei dem
eine Auswerteeinheit (6) für die von der Überwachungseinheit (4) übermittelten Daten
bei durch die Auswerteeinheit (6) erkannter Unterschreitung eines festen oder variablen Schwellwertes (SW)
oder
bei durch die Auswerteeinheit (6) erkanntem Empfang eines den Schließmechanismus der Fahrzeugtür (2) entriegelnden Signals
- einen den außenliegenden Türgriff (8) der Fahrzeugtür (2) überwachenden Betriebsmodus, also einen Türgriffüberwachungsmodus, aktiviert, und
- die Ausgabe eines Warnsignals veranlasst, sobald eine Person und/oder eine entsprechende Einrichtung den außenliegenden Türgriff (8) der Fahrzeugtür (2) betätigt oder entriegelt, obwohl im überwachten Bereich (5) der Überwachungseinheit (4) ein, insbesondere herannahendes oder oberhalb des Fahrzeugs (1) ortsfestes, Objekt (10 bzw. 21,22) detektiert ist
**dadurch gekennzeichnet, dass**
der Türgriffüberwachungsmodus bei Unterschreitung einer Fahrzeuggeschwindigkeit als Schwellwert aktiviert wird.

3. Verfahren nach Anspruch 1 oder 2, bei dem der Türgriffüberwachungsmodus spätestens bei Unterschreiten von 5 km/h, insbesondere schon bei 8 km/h, vorzugsweise schon bei 10 km/h aktiviert wird.

4. Verfahren nach einem der vorherigen Ansprüche, bei dem ein optisches, akustisches und/oder haptisches Warnsignals ausgegeben wird.

5. Verfahren nach Anspruch 4, bei dem als optisches Warnsignal eine, beispielsweise rot blinkende, LED-Anzeige (14) bei einem detektierten Objekt (9; 10) und eine, beispielsweise dauerhaft grün leuchtende, LED-Anzeige (14) bei einem objektfreien Überwachungsbereich (5) vorgesehen sind.

6. Verfahren nach Anspruch 4 oder 5, bei dem als akustisches Warnsignal eine einfache Tonausgabe wie beispielsweise ein gleichmäßiger Dauerton, ein intuitives Signal wie das einer Fahrradklingel oder einer Autohupe und/oder eine komfortablere Sprachausgabe, beispielsweise etwa "Vorsicht: Poller", "Hauswand", "Achtung: Radfahrer", "fahrendes oder parkendes Drittfahrzeug", "Obacht: Bodenunebenheit", "Bordsteinkante", "Wasserpfütze" oder dergleichen, vorgesehen sind.

7. Verfahren nach Anspruch 4 bis 6, bei dem als haptisches Warnsignal ein verzögertes Öffnen der Fahrzeugtür (2), welches insbesondere erst bei einem Zweitversuche gestattet wird, vorgesehen ist.

8. Verfahren nach Anspruch 4 bis 6, bei dem als haptisches Warnsignal ein die Fahrzeugtür (2) verriegelnder Mechanismus vorgesehen ist, welcher beispielsweise erst in Verbindung mit einem Bestätigungsmechanismus entriegelt.

9. Verfahren nach einem der vorherigen Ansprüche, bei dem auch eine Warnung anderer Verkehrsteilnehmer (10) vorgesehen ist, beispielsweise über die kraftfahrzeugeigenen Blinker (11) und/oder Scheinwerfer (12) bzw. Rücklichter (13).

10. Verfahren nach einem der vorherigen Ansprüche, bei dem die Verwendung einer Überwachungseinheit (4) mit 2D- oder 3D-Bilderfassungssensoren wie in Mono-, Stereo- und/oder Laufzeitkameras, Ultraschallsensoren, Radarsensoren, Infrarotsensoren, und/oder dergleichen mehr, vorgesehen ist.

11. Verfahren nach einem der vorherigen Ansprüche, bei dem die Fahrzeugtüren (2) mechanisch, elektrisch und/oder motorisch, insb. elektromotorisch, ent- und/oder verriegelt werden, wobei insbesondere das Öffnen und Schließen von Flügel- und Schiebetüren (2) sowie des Kofferraumdeckels bzw. der Heckklappe (2) elektrisch per Knopfdruck, Fernbedienung oder dergleichen automatisiert erfolgt.

12. Vorrichtung zur Vermeidung von Personen- und Sachschäden durch Kraftfahrzeugtüren (2) anhaltender Kraftfahrzeuge (1), insbesondere zur Durchführung des Verfahrens nach einem der vorherigen Ansprüche, mit
- wenigstens einer den Außenraum (3), insbesondere neben dem Fahrzeug (1), erfassenden Überwachungseinheit (4);
- einer Auswerteeinheit (6) für die von der Überwachungseinheit (4) übermittelten Daten;
- einem Mittel (6) zum Erkennen einer Unterschreitung eines festen oder variablen Schwellwertes (SW)
und/oder
zum Erkennen des Empfangs eines den Schließmechanismus der Fahrzeugtür (2) entriegelnden Signals;
- einem Mittel (6) zum Aktivieren eines den innenliegenden Türgriff (7) der Fahrzeugtür (2) überwachenden Betriebsmodus; und mit
- einem Mittel (14) zur Ausgabe eines Warnsignals, sobald ein Insasse und/oder eine entsprechende Einrichtung zumindest den innenliegenden Türgriff (7) der Fahrzeugtür (2) betätigt und/oder entriegelt, obwohl im überwachten Bereich (5) der Überwachungseinheit (4) ein im Wesentlichen ortsfestes (9) oder herannahendes (10) Objekt detektiert ist bei dem der Türgriffüberwachungsmodus bei Unterschreitung einer Fahrzeuggeschwindigkeit als Schwellwert aktiviert wird.

13. Vorrichtung zur Vermeidung von Personen- und Sachschäden durch Kraftfahrzeugtüren (2) anhaltender oder parkender Kraftfahrzeuge (1), insbesondere zur Durchführung des Verfahrens nach einem der vorherigen Ansprüche, mit
- wenigstens einer den Außenraum (3), insbesondere neben und/oder oberhalb dem Fahrzeug (1), erfassenden Überwachungseinheit (4);
- einer Auswerteeinheit (6) für die von der Überwachungseinheit (4) übermittelten Daten;
- einem Mittel (6) zum Erkennen einer Unterschreitung eines festen oder variablen Schwellwertes (SW)
und/oder
zum Erkennen des Empfangs eines den Schließmechanismus der Fahrzeugtür (2) entriegelnden Signals;
- einem Mittel (6) zum Aktivieren eines den außenliegenden Türgriff (8) der Fahrzeugtür (2) überwachenden Betriebsmodus; und mit
- einem Mittel (6) zur Ausgabe eines Warnsignals, sobald eine Person und/oder eine entsprechende Einrichtung den außenliegenden Türgriff (8) der Fahrzeugtür (2) betätigt und/oder entriegelt, obwohl im überwachten Bereich (5) der Überwachungseinheit (4) ein, insbesondere herannahendes oder oberhalb des Fahrzeugs (1) ortsfestes, Objekt (10 bzw. 21,22) detektiert ist bei dem der Türgriffüberwachungsmodus bei Unterschreitung einer Fahrzeuggeschwindigkeit als Schwellwert aktiviert wird.

14. Vorrichtung nach Anspruch 12 oder 13, **gekennzeichnet durch** Mittel zur Ausgabe eines optischen (14), akustischen und/oder haptischen Warnsignals.

15. Vorrichtung nach Anspruch 14, **gekennzeichnet durch** ein optisches Mittel (14), beispielsweise eine LED-Anzeige, zur Ausgabe eines Warnsignals, welche an der Fahrzeugtür (2) angeordnet sind, vorzugsweise in räumlicher und/oder optischer, insbesondere gleichermaßen von innen und außen gut sichtbaren, Nachbarschaft des innenliegenden Türgriffs (7).

16. Vorrichtung nach Anspruch 14 oder 15, **gekennzeichnet durch** einen im Dachhimmel, in der Fahrzeugtür (2) selbst oder an anderer geeigneter Stelle im Kraftfahrzeug (1) angeordneten Lautsprecher, welcher auch Teil der kraftfahrzeugeigenen Musikanlage sein kann.

17. Vorrichtung nach Anspruch 14 bis 16, **gekennzeichnet durch** ein haptisches Mittel, welches das Öffnen der Fahrzeugtür (2) verzögert, vorzugsweise erst bei einem zweiten Versuch gestattet.

18. Vorrichtung nach Anspruch 14 bis 16, **gekennzeichnet durch** ein die Fahrzeugtür (2) verriegelndes Mittel, welches in Verbindung mit einem, vorzugsweise neben oder am oder im Griff (7, 8) angeordneten bzw. integrierten, Bestätigungsmechanismus, z.B. eines Buttons, deaktivierbar ist.

19. Vorrichtung nach einem der Ansprüche 12 bis 18, **gekennzeichnet durch** ein Mittel, welches auch eine Warnung anderer Verkehrsteilnehmer gestattet, beispielsweise über die kraftfahrzeugeigenen Blinker (11) und/oder Scheinwerfer (12) bzw. Rücklichter (13).

20. Vorrichtung nach einem der vorherigen Ansprüche 12 bis 19, **gekennzeichnet durch** eine im Außenrückspiegel (15, 16) und/oder hinter der Heckscheibe (17) und/oder im Rücklicht (13) und/oder im Frontlicht (12) und/oder im Blinker (11) des Kraftfahrzeuges angeordnete Überwachungseinheit (4) mit einem im Wesentlichen entgegen der Fahrtrichtung ausgerichtetem Überwachungsbereich (5).

21. Vorrichtung nach einem der vorherigen Ansprüche 12 bis 20, **gekennzeichnet durch** eine im Außenrückspiegel (14, 15) und/oder hinter der Frontscheibe (18) und/oder im Frontlicht (12) und/oder im Rücklicht (13) und/oder im Blinker (11) des Kraftfahrzeuges (1) angeordnete Überwachungseinheit (4) mit einem im Wesentlichen in Fahrtrichtung ausgerichteten Überwachungsbereich (5).

22. Vorrichtung nach einem der vorherigen Ansprüche 12 bis 21, **gekennzeichnet durch** eine in der Stoßstange (19), der Mobilfunk- oder Radioantenne (20), hinter der Heckscheibe (17), oder anderer geeigneter Stelle des Kraftfahrzeuges angeordneten Überwachungseinheit (4) mit einem im Wesentlichen nach oben ausgerichteten Überwachungsbereich (5).

23. Vorrichtung nach einem der vorherigen Ansprüche 12 bis 22, **gekennzeichnet durch** eine Überwachungseinheit (4) mit 2D oder 3D-Bilderfassungssensoren wie in Mono-, Stereo- und/oder Laufzeitkameras, Ultraschallsensoren, Radarsensoren, Infrarotsensoren, und/oder dergleichen mehr.

24. Vorrichtung nach einem der vorherigen Ansprüche 12 bis 23, **gekennzeichnet durch** mechanisch, elektrisch und/oder motorisch, insb. elektromotorisch, ent- und/oder verriegelbare Fahrzeugtüren (2), insbesondere automatisiert per Knopfdruck, Fernbedienung oder dergleichen.

## Claims

1. Method for preventing personal injuries and material damage caused by vehicle doors (2) of stopping motor vehicles (1) having at least one monitoring unit (4) monitoring the external space (3), in particular next to the vehicle (1),
wherein
an evaluation unit (6) for the data transmitted by the monitoring unit (4) in the event of an undershooting of a fixed or variable threshold value (SW) being detected by the evaluation unit (6)
or
in the event of the reception of an unlocking signal to unlock the locking mechanism of the vehicle door (2) being detected by the evaluation unit (6),
- activates an operating mode monitoring the inside door handle (7) of the vehicle (2), i.e. a door handle monitoring mode, and
- initiates the output of a warning signal immediately an occupant and/or a corresponding device actuates and/or unlocks the inside door handle (7) of the vehicle door (2) although an essentially stationary (9) or approaching (10) object has been detected in the monitored area (5) of the monitoring unit (4),
**characterised in that**
the door handle monitoring mode is activated when the vehicle's speed falls below a value specified as a threshold value.

2. Method for preventing personal injuries or material damage caused by vehicle doors (2) of stopping or parked vehicles (1) having at least one monitoring unit (4) monitoring the external space (3), in particular next to and/or above the vehicle (1),
wherein
an evaluation unit (6) for the data transmitted by the monitoring unit (4)
in the event of an undershooting of a fixed or variable threshold value (SW) being detected by the evaluation unit (6)
or
in the event of the reception of an unlocking signal to unlock the locking mechanism of the vehicle door (2) being detected by the evaluation unit (6),
- activates an operating mode monitoring the outside door handle (8) of the vehicle (2), and
- initiates the output of a warning signal immediately an occupant and/or a corresponding device actuates or unlocks the outside door handle (8) of the vehicle door (2), although an in particular approaching (10) object or a stationary object (10 or 21,22) above the vehicle (1) is detected in the monitored area (5) of the monitoring unit (4),
**characterised in that**
the door handle monitoring mode is activated when the vehicle speed falls below a value specified as a threshold value.

3. Method according to claim 1 or 2, wherein the door handle monitoring mode is activated at the latest when a vehicle speed drops below 5 km/h, in particular already at 8 km/h but preferably already at 10 km/h.

4. Method according to one of the preceding claims, wherein an optical, acoustic and/or haptic warning signal is output.

5. Method according to claim 4, wherein there is provided as an optical warning signal a red flashing LED display (14), for example, in the case of a detected object (9, 10) and, for example, a LED display (14) glowing a steady green if the monitoring area (5) is free of objects,.

6. Method according to claim 4 or 5, wherein as an acoustic warning signal a simple sound output is provided such as a regular continuous tone, an intuitive signal such as a bicycle bell or a car horn and/or a more convenient voice output, say, for example, "caution: bollard", "building wall", "careful: cyclist", "other vehicle moving or parking", "attention: uneven surface", "kerbstone edge", "puddle" or similar.

7. Method according to claim 4 to 6, wherein as a haptic warning signal a delayed opening of the vehicle door (2), which in particular is permitted only at a second attempt, is provided.

8. Method according to claim 4 to 6, wherein as a haptic warning signal a mechanism for locking the vehicle door (2) is provided which unlocks the door for example only in conjunction with a confirmation mechanism.

9. Method according to one of the preceding claims, wherein a warning of other road users (10) is also provided, for example via the vehicle indicator lights (11) and/or headlights (12) or tail lights (13).

10. Method according to one of the preceding claims, wherein the use of a monitoring unit (4) having 2D or 3D image acquisition sensors such as in mono, stereo and/or runtime cameras, ultrasound sensors, radar sensors, infrared sensors, and/or similar is provided.

11. Method according to one of the preceding claims, wherein the vehicle doors (2) are locked and/or unlocked mechanically, electrically and/or by motor, in particular by electric motor, with swing-out and sliding doors (2) and the boot lid or tailgate (2) being opened and closed automatically in particular electrically at the press of a button, by remote control or similar.

12. Device for preventing personal injuries and material damage caused by vehicle doors (2) of stopping motor vehicles (1), in particular for performing the method according to one of the preceding claims, comprising
- at least one monitoring unit (4) monitoring the external space (3), in particular next to the vehicle (1),
- an evaluation unit (6) for the data transmitted by the monitoring unit (4),
- a means (6) for detecting if a fixed or variable threshold value (SW) is undershot
and/or
for detecting the reception of a signal for unlocking the locking mechanism of the vehicle door (2),
- a means (6) for activating an operating mode for monitoring the inside door handle (7) of the vehicle door (2), and comprising
- a means (14) for outputting a warning signal immediately an occupant and/or a corresponding device at least actuates and/or unlocks the inside door handle (7) of the vehicle door (2), although an essentially stationary object (9) or an approaching object (10) has been detected in the monitored area (5) of the monitoring unit (4), with the door handle monitoring mode being activated when a vehicle speed falls below a value specified as a threshold value.

13. Device for preventing personal injuries or material damage caused by vehicle doors (2) of stopping or parked vehicles (1), in particular for performing the method according to one of the preceding claims, comprising
- at least one monitoring unit (4) monitoring the external space (3), in particular next to and/or above the vehicle (1),
- an evaluation unit (6) for the data transmitted by the monitoring unit (4),
- a means (6) for detecting if a fixed or variable threshold value (SW) is undershot
and/or
for detecting the reception of a signal for unlocking the locking mechanism of the vehicle door (2),
- a means (6) for activating an operating mode monitoring the outside door handle (8) of the vehicle door (2), and comprising
- a means (6) for outputting a warning signal immediately a person and/or a corresponding device actuates and/or unlocks the outside door handle (8) of the vehicle door (2), although an in particular approaching or stationary object (10 or 21, 22) above the vehicle (1) is detected in the monitored area (5) of the monitoring unit (4), with the door handle monitoring mode being activated when a vehicle speed falls below a value specified as a threshold value.

14. Device according to claim 12 or 13, **characterised by** means for outputting an optical (4), acoustic and/or haptic warning signal.

15. Device according to claim 14, **characterised by** optical means (14), for example an LED display, for outputting a warning signal which are arranged on the vehicle door (2), preferably in the spatial and/or optical vicinity of the inside door handle (7), in particular so that it can be seen equally well from inside and outside.

16. Device according to claim 14 or 15, **characterised by** a loudspeaker mounted in the roof lining, in the vehicle door (2) itself or at another suitable point in the vehicle (1), which loudspeaker can also be part of the vehicle music system.

17. Device according to claim 14 to 16, **characterised by** a haptic means which delays the opening of the vehicle door (2), preferably permitting same only at a second attempt.

18. Device according to claim 14 to 16, **characterised by** a means for locking the vehicle door (2) which can be deactivated in conjunction with a confirmation mechanism, for example a button, which is preferably disposed or integrated near, on or in the handle (7, 8).

19. Device according to one of claims 12 to 18, **characterised by** a means which also allows other road users to be warned, for example by means of the vehicle's indicator lights (11) and/or headlights (12) or tail lights (13)

20. Device according to one of the preceding claims 12 to 19, **characterised by** a monitoring unit (4) with a monitoring area (5) essentially orientated against the direction of travel and mounted in the external rear view mirror (15, 16) and/or behind the rear window (17) and/or in the tail light (13) and/or in the front light (12) and/or in the indicator light (11) of the motor vehicle.

21. Device according to one of the preceding claims 12 to 19, **characterised by** a monitoring unit (4) with a monitored area (5) essentially orientated in the direction of travel and mounted in the external rear view mirror (14, 15) and/or behind the windscreen (18) and/or in the front light (12) and/or in the tail light (13) and/or in the indicator light (11) of the motor vehicle (1).

22. Device according to one of the preceding claims 12 to 21, **characterised by** a monitoring unit (4) with a monitoring area (5) essentially orientated upwards, said monitoring unit (4) being mounted in the bumper (19), in the mobile radio antenna or radio antenna (20), behind the rear window (17) or at some other suitable point of the motor vehicle.

23. Device according to one of the preceding claims 12 to 22, **characterised by** a monitoring unit (4) having 2D or 3D image acquisition sensors such as in mono, stereo and/or runtime cameras, ultrasound sensors, radar sensors, infrared sensors and/or similar.

24. Device according to one of the preceding claims 12 to 23, **characterised by** vehicle doors (2) which can be locked and/or unlocked mechanically, electrically and/or by motor, in particular by electric motor, in particular automatically at the press of a button, by remote control or similar.

## Revendications

1. Procédé pour éviter les dommages personnels et matériels dus à des portes (2) de véhicules automobiles (1) qui s'arrêtent, comprenant au moins une unité de surveillance (4) qui couvre l'espace extérieur (3), en particulier à côté du véhicule (1),
dans lequel une unité d'analyse (6) pour les données transmises par l'unité de surveillance (4), lors du franchissement vers le bas d'un seuil (SW) fixe ou variable qui est détecté par l'unité d'analyse (6)
ou lors de la réception, détectée par l'unité d'analyse (6), d'un signal qui déverrouille le mécanisme de fermeture de la porte (2) du véhicule
- active un mode de fonctionnement, c'est-à-dire un mode de surveillance de la poignée de porte, qui surveille la poignée intérieure (7) de la porte (2) de véhicule, et
- déclenche l'émission d'un signal d'avertissement dès qu'un occupant et/ou un dispositif correspondant actionnent et/ou déverrouillent la poignée intérieure (7) de la porte (2) de véhicule alors qu'un objet sensiblement fixe (9) ou qui s'approche (10) est détecté dans la région surveillée (5) de l'unité de surveillance (4),
**caractérisé en ce que** le mode de surveillance de poignée de porte est activé lors du franchissement vers le bas d'une vitesse du véhicule constituant un seuil.

2. Procédé pour éviter les dommages personnels et matériels causés par des portes (2) de véhicules automobiles (1) qui s'arrêtent ou sont stationnés, comprenant au moins une unité de surveillance (4) qui couvre l'espace extérieur (3), en particulier situé à côté et/ou au-dessus du véhicule (1),
dans lequel une unité d'analyse (6) pour les données transmises par l'unité de surveillance (4), lors du franchissement vers le bas d'un seuil (SW) fixe ou variable qui est détecté par l'unité d'analyse (6)
ou lors de la réception, détectée par l'unité d'analyse (6), d'un signal qui déverrouille le mécanisme de fermeture de la porte (2) du véhicule
- active un mode de fonctionnement, c'est-à-dire un mode de surveillance de la poignée de porte, qui surveille la poignée extérieure (8) de la porte (2) de véhicule, et
- déclenche l'émission d'un signal d'avertissement dès qu'une personne et/ou un dispositif correspondant actionne ou déverrouille la poignée extérieure (8) de la porte (2) du véhicule alors qu'un objet (10 ou 21, 22) en particulier qui s'approche ou qui est fixe et se trouve au-dessus du véhicule (1) est détecté dans la région surveillée (5) de l'unité de surveillance (4),
**caractérisé en ce que** le mode de surveillance de poignée de porte est activé lors du franchissement vers le bas d'une vitesse du véhicule constituant un seuil.

3. Procédé selon la revendication 1 ou 2, dans lequel le mode de surveillance de la poignée de porte est activé au plus tard lorsqu'on passe au-dessous de 5 km/h, en particulier déjà à 8 km/h, de préférence déjà à 10 km/h.

4. Procédé selon l'une des revendications précédentes, dans lequel un signal d'avertissement optique, acoustique et/ou tactile est émis.

5. Procédé selon la revendication 4, dans lequel il est prévu, comme signal d'avertissement optique, un indicateur à DEL, par exemple rouge clignotante (14) pour le cas d'on objet (9 ; 10) détecté, et un indicateur à DEL, par exemple verte allumée en continu (14) lorsque la zone de surveillance (5) est libre d'objet.

6. Procédé selon la revendication 4 ou 5, dans lequel il est prévu, comme signal d'avertissement acoustique, une simple émission sonore comme, par exemple, une tonalité continue uniforme, un signal intuitif comme une sonnette de bicyclette ou un avertisseur sonore d'automobile et/ou une émission vocale plus confortable, par exemple à peu près "attention : plot", "mur d'immeuble", "attention : cycliste", "véhicule tiers en marche ou stationné", "attention : irrégularité du sol", "arête de bordure de trottoir", "flaque d'eau ou analogue".

7. Procédé selon l'une des revendications 4 à 6, dans lequel il est prévu, comme signal d'avertissement tactile, une ouverture temporisée de la porte (2) du véhicule, qui, en particulier, n'est autorisée que lors d'une deuxième tentative.

8. Procédé selon l'une des revendications 4 à 6, dans lequel il est prévu, comme signal d'avertissement tactile, un mécanisme qui verrouille la porte (2) du véhicule et qui, par exemple est déverrouillé seulement en combinaison avec un mécanisme d'actionnement.

9. Procédé selon l'une des revendications précédentes, dans lequel il est aussi prévu un avertissement à l'intention d'autres usagers de la voie publique (10), par exemple au moyen de clignoteurs (11) et/ou de phares (12) ou de feux arrière (13) du véhicule.

10. Procédé selon l'une des revendications précédentes, dans lequel il est prévu d'utiliser une unité de surveillance (4) possédant des détecteurs d'acquisition d'images en 2D ou 3D comme dans des caméras mono, stéréo et/ou à durée de marche, des détecteurs à ultrasons, de détecteurs radar, de détecteurs à infrarouges et/ou encore d'autres détecteurs analogues.

11. Procédé selon l'une des revendications précédentes, dans lequel les portes (2) du véhicule sont déverrouillées et/ou verrouillées par voie mécanique, électrique et/ou motorisée, en particulier à moteur électrique, dans lequel, en particulier l'ouverture et la fermeture de portes battantes et à glissière (2), ainsi que du couvercle du coffre ou du hayon (2) s'effectuent électriquement par pression sur un bouton poussoir, télécommande ou d'une façon automatisée analogue.

12. Dispositif pour éviter les dommages personnels et matériel dus à des portes (2) de véhicules automobiles (1) qui s'arrêtent, en particulier pour la mise en oeuvre du procédé selon une des revendications précédentes, comprenant
- au moins une unité de surveillance (4) qui couvre l'espace extérieur (3), en particulier à côté du véhicule (1) ;
- une unité d'analyse (6) pour les données transmises par l'unité de surveillance (4) ;
- un moyen (6) pour la détection du franchissement vers le bas d'un seuil fixe ou variable (SW) et/ou
pour la détection de la réception d'un signal qui déverrouille le mécanisme de fermeture de la porte (2) du véhicule ;
- un moyen (6) pour l'activation d'un mode de fonctionnement surveillant la poignée intérieure (7) de la porte (2) de véhicule ; et
- un moyen (14) pour émettre un signal d'avertissement dès qu'un occupant et/ou un dispositif correspondant actionnent et/ou déverrouillent au moins la poignée intérieure (7) de la porte (2) de véhicule alors qu'un objet sensiblement fixe (9) ou qui s'approche (10) est détecté dans la région surveillée (5) de l'unité de surveillance (4), dans lequel le mode de surveillance de la poignée de porte est activé lors du franchissement vers le bas d'une vitesse du véhicule constituant un seuil.

13. Dispositif pour éviter les dommages personnels et matériel dus à des portes (2) de véhicules automobiles (1) qui s'arrêtent ou qui sont stationnés, en particulier pour la mise en oeuvre du procédé selon une des revendications précédentes, comprenant
- au moins une unité de surveillance (4) qui couvre l'espace extérieur (3), en particulier à côté et/ou au-dessus du véhicule (1) ;
- une unité d'analyse (6) pour les données transmises par l'unité de surveillance (4) ;
- un moyen (6) pour la détection du franchissement vers le bas d'un seuil fixe ou variable (SW) et/ou
pour la détection de la réception d'un signal qui déverrouille le mécanisme de fermeture de la porte (2) du véhicule ;
- un moyen (6) pour l'activation d'un mode de fonctionnement surveillant la poignée extérieure (8) de la porte (2) de véhicule ; et
- un moyen (14) pour émettre un signal d'avertissement dès qu'une personne et/ou un dispositif correspondant actionnent et/ou déverrouillent au moins la poignée extérieure (7) de la porte (2) de véhicule alors qu'un objet, en particulier qui s'approche ou qui est fixe situé au-dessus du véhicule (10, ou 21, 22) est détecté dans la région surveillée (5) de l'unité de surveillance (4), dans lequel le mode de surveillance de la poignée de porte est activé lors du franchissement vers le bas d'une vitesse du véhicule constituant un seuil.

14. Dispositif selon la revendication 12 ou 13, **caractérisé par** des moyens pour émettre un signal d'avertissement optique (14) acoustique et/ou tactile.

15. Dispositif selon la revendication 14, **caractérisé par** un moyen optique (14), par exemple un indicateur à DEL, pour émettre un signal d'avertissement, qui est disposé sur la porte (2) du véhicule, de préférence dans le voisinage spatial et/ou optique de la poignée intérieure (7) de la porte, en particulier bien visible aussi bien de l'intérieur et de l'extérieur.

16. Dispositif selon la revendication 14 ou 15, **caractérisé par** un haut-parleur disposé dans le plafond, dans la porte même (2) du véhicule ou dans un autre emplacement approprié dans le véhicule automobile (1), et qui peut aussi faire partie de l'installation de sonorisation du véhicule automobile.

17. Dispositif selon l'une des revendications 14 à 16, **caractérisé par** un moyen tactile qui temporise l'ouverture de la porte (2) du véhicule, de préférence qui n'autorise cette ouverture que lors d'une deuxième tentative.

18. Dispositif selon l'une des revendications 14 à 16, **caractérisé par** un moyen verrouillant la porte (2) du véhicule qui peut être désactivé en combinaison avec un mécanisme d'actionnement, par exemple un bouton, qui est de préférence disposé à côté de la poignée (7, 8) ou sur cette poignée ou intégré dans cette poignée.

19. Dispositif selon l'une des revendications précédentes 12 à 18, **caractérisé par** un moyen qui permet aussi d'avertir d'autres usagers de la voie publique, par exemple au moyen des clignoteurs (11) et/ou d'un phare (12) ou feu arrière (13) du véhicule automobile.

20. Dispositif selon l'une des revendications précédentes 12 à 19, **caractérisé par** une unité de surveillance (4) possédant une région de surveillance (5) dirigée essentiellement en sens inverse de la marche, qui est disposée dans le rétroviseur extérieur (15, 16) et/ou derrière la lunette arrière (17) et/ou dans le feu arrière (13) et/ou dans un feu avant (12) et/ou dans le clignoteur (11) du véhicule automobile.

21. Dispositif selon l'une des revendications précédentes 12 à 20, **caractérisé par** une unité de surveillance (4) possédant une région de surveillance (5) dirigée essentiellement dans le sens de la marche, qui est disposée dans le rétroviseur extérieur (14, 15) et/ou derrière le pare-brise (18) et/ou dans le feu avant (12) et/ou dans le feu arrière (13) et/ou dans le clignoteur (11) du véhicule automobile.

22. Dispositif selon l'une des revendications précédentes 12 à 21, **caractérisé par** une unité de surveillance (4) possédant une région de surveillance (5) dirigée essentiellement vers le haut, qui est disposée dans le pare-chocs (19), dans l'antenne de radiotéléphonie mobile ou de radio (20), derrière la lunette arrière (17) ou dans un autre emplacement approprié du véhicule automobile,.

23. Dispositif selon l'une des revendications précédentes 12 à 22, **caractérisé par** une unité de surveillance (4) possédant des détecteurs d'acquisition d'images en 2D ou 3D comme des caméras mono, stéréo et/ou à temps de marche, des détecteurs à ultrasons, des détecteurs radar, des détecteurs à infrarouges et/ou analogues.

24. Dispositif selon l'une des revendications précédentes 12 à 23, **caractérisé par** des portes de véhicule (2) pouvant être déverrouillées et/ou verrouillées par voie mécanique, électrique et/ou motorisée, en particulier par un moteur électrique, en particulier de façon automatisée par pression sur un bouton, par télécommande, ou analogue.
